# FASCICULE DE BREVET EUROPEEN

(11) **EP 4 237 600 B1**
(45) Date de publication et mention de la délivrance du brevet: **11.06.2025**
(21) Numéro de dépôt: 21801065.0
(22) Date de dépôt: 25.10.2021
(51) Int. Cl.: C25B 1/042, C25B 9/00, C25B 15/021

(54) **SYSTÈME D'ÉLECTROLYSEUR HAUTE TEMPÉRATURE OPTIMISÉ PAR DÉPRESSION DE L'ALIMENTATION EN VAPEUR D'EAU**
DURCH DAMPFZUFUHRVAKUUM OPTIMIERTES HOCHTEMPERATURELEKTROLYSESYSTEM
HIGH-TEMPERATURE ELECTROLYSER SYSTEM OPTIMISED BY STEAM SUPPLY VACUUM

(30) Priorité: 30.10.2020 FR 2011129
(43) Date de publication de la demande: 06.09.2023
(73) Titulaire: Commissariat à l'Energie Atomique et aux Energies Alternatives, 75015 Paris (FR)
(72) Inventeur: DUMOULIN, Pierre, 38054 GRENOBLE Cedex 09 (FR); BANDELIER, Philippe, 38054 GRENOBLE Cedex 09 (FR)
(74) Mandataire: Hautier IP
(86) Numéro de dépôt international: PCT/EP2021/079531
(87) Numéro de publication internationale: WO 2022/090151

(56) Documents cités:
- WO-A1-2020/107047
- CN-A- 110 904 464
- US-A1- 2013 126 360
- US-A1- 2018 287 179

## Description

### DOMAINE TECHNIQUE DE L'INVENTION

La présente invention concerne le domaine de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis), également à oxyde solide (SOEC, acronyme anglais pour « Solid Oxide Electrolyte Cell ») et celui des piles à combustible à oxydes solides (SOFC, acronyme anglais pour « Solid Oxide Fuel Cell »). Elle trouve pour application particulièrement pour optimiser la consommation énergétique d'un système électrolyseur SOEC.

### ÉTAT DE LA TECHNIQUE

L'électrolyse de l'eau est une réaction électrolytique qui décompose l'eau en dioxygène et dihydrogène gazeux avec l'aide d'un courant électrique selon la réaction: H₂O → H₂ + 1/2 O₂.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Une cellule d'électrolyse à oxydes solides ou « SOEC » (acronyme anglo-saxon « Solid Oxide Electrolyte Cell ») comprend notamment : - une première électrode conductrice poreuse, ou « cathode », destinée à être alimentée en vapeur d'eau pour la production de dihydrogène, - une seconde électrode conductrice poreuse, ou « anode », par laquelle s'échappe le dioxygène produit par l'électrolyse de l'eau injectée sur la cathode, et - une membrane à oxyde solide (électrolyte dense) prise en sandwich entre la cathode et l'anode, la membrane étant conductrice anionique pour de hautes températures, usuellement des températures supérieures à 600°C. En chauffant la cellule au moins à cette température et en injectant un courant électrique I entre la cathode et l'anode, il se produit alors une réduction de l'eau sur la cathode, ce qui génère du dihydrogène (H2) au niveau de la cathode et du dioxygène au niveau de l'anode. Pour mettre en œuvre l'électrolyse à haute température, il est connu d'utiliser un électrolyseur de type SOEC constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, on injecte de la vapeur d'eau H2O dans le compartiment cathodique.

Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H2 et des ions oxygène. Le dihydrogène est collecté et évacué en sortie de compartiment à hydrogène. Les ions oxygène migrent à travers l'électrolyte et se recombinent en dioxygène O₂ à l'interface entre l'électrolyte et l'électrode à oxygène (anode).

Pour la mise en œuvre effective de l'électrolyse par l'empilement, l'empilement est porté à une température supérieure à 600°C, usuellement une température comprise entre 600°C et 950°C, l'alimentation en gaz est mise en marche à débit constant et une source d'alimentation électrique est branchée entre deux bornes de l'empilement afin d'y faire circuler le courant I.

Le rendement de la transformation de l'électricité en hydrogène est un point clé afin d'assurer la compétitivité de la technologie. La consommation électrique a principalement lieu lors de la réaction d'électrolyse à proprement parler, mais près de 30% de la consommation de l'électrolyseur provient du système de gestion thermique/hydraulique des fluides. C'est-à-dire l'architecture externe à l'électrolyseur et la gestion des fluides et de l'énergie thermique dans cette architecture.

L'évaporation de l'eau utilisée dans l'électrolyseur est la consommation d'énergie la plus importante de ce système de gestion thermique/hydraulique. Classiquement, cette fonction est assurée par un générateur de vapeur électrique qui consomme 20% de la consommation globale de l'électrolyseur.

Par ailleurs, en général une partie importante d'énergie est rejetée dans l'environnement ambiant. Par exemple, durant la phase d'assèchement de l'hydrogène et de sa compression il est nécessaire de fortement refroidir ce mélange afin de permettre la condensation de l'eau présente dans le mélange eau/hydrogène. Cette condensation s'effectue très majoritairement à une température inférieure à la température d'évaporation de l'eau en entrée de l'électrolyseur, ce qui fait qu'une très faible part de cette énergie de condensation est utilisable.

On connait le document CN110904464 A1 qui décrit un système de production d'hydrogène par électrolyse d'eau de mer à base d'énergie éolienne offshore. Le système comprend un évaporateur assurant la production de vapeur d'eau par échange thermique avec le dihydrogène produit. L'évaporateur est un échangeur thermique qui est mis en dépression par une pompe à vide. Ce système ne semble pas résoudre les inconvénients cités ci-dessus. Le système est lui-même complexe et peu adapté.

Il existe donc un besoin de minimiser cette consommation en optimisant l'architecture et la gestion des fluides du système de l'électrolyseur
Un objet de la présente invention est donc de proposer un système d'électrolyseur haute température optimisé.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, selon un mode de réalisation l'invention prévoit un système comprenant un électrolyseur à haute température (EHT), une première ligne d'alimentation de l'électrolyseur configurée pour alimenter l'électrolyseur en vapeur d'eau, une première ligne d'évacuation de l'électrolyseur configurée pour évacuer depuis l'électrolyseur du dihydrogène, une deuxième ligne d'évacuation de l'électrolyseur configurée pour évacuer depuis l'électrolyseur du dioxygène, un premier module d'échange thermique configuré pour assurer un échange thermique entre la première ligne d'alimentation en vapeur d'eau et la première ligne d'évacuation du dihydrogène, un générateur de vapeur agencé sur la première ligne d'alimentation en vapeur d'eau, en amont du premier module d'échange thermique, et configuré pour produire de la vapeur d'eau à partir d'eau liquide, caractérisé en ce que le système comprend un module de mise en dépression d'un tronçon de la première ligne d'alimentation, le module comprenant un détendeur et un compresseur, le détendeur étant agencé, sur la première ligne d'alimentation en vapeur d'eau, en amont du générateur de vapeur et le compresseur étant agencé, sur la première ligne d'alimentation en vapeur d'eau, en aval du générateur de vapeur.

Ainsi, le système propose de réduire la pression dans un tronçon de la première ligne d'alimentation afin de diminuer la température d'ébullition de l'eau circulant dans la première ligne d'alimentation. La dépression est ensuite préférentiellement compensée par une re-compression jusqu'à la pression atmosphérique, une fois l'évaporation de l'eau en vapeur d'eau réalisée dans le générateur de vapeur. Le tronçon qui est dépressurisé entoure le générateur de vapeur.

Préférentiellement, l'ébullition de l'eau s'effectue à une température inférieure à la température du rejet thermique de l'électrolyseur et en particulier la température du dioxygène et du dihydrogène, ce qui favorise l'échange et donc l'exploitation des rejets thermiques.

Un autre aspect concerne un système tel que décrit ci-dessus comprenant un module de récupération de l'énergie thermique du dihydrogène en sortie du premier module d'échange thermique au profit de la première ligne d'alimentation en vapeur d'eau, le module de récupération comprenant une pompe à chaleur comprenant un circuit fluidique configuré pour recevoir un fluide caloporteur, un premier évaporateur agencé sur la première ligne d'évacuation en aval du premier module d'échange thermique configuré pour transférer l'énergie thermique du dihydrogène au fluide caloporteur, un compresseur configuré pour comprimer le fluide caloporteur, un condenseur agencé sur la première ligne d'alimentation en vapeur d'eau en amont du générateur de vapeur et configuré pour transférer l'énergie thermique du fluide caloporteur à l'eau liquide, un détendeur configuré pour détendre le fluide caloporteur, le circuit fluidique étant configuré pour connecter fluidiquement le premier évaporateur au compresseur, le compresseur au condenseur, le condenseur au détendeur et le détendeur au premier évaporateur.

Cette disposition permet de récupérer l'énergie thermique du dihydrogène produit par l'électrolyseur pour participer à l'évaporation de l'eau liquide et donc réduire la consommation énergétique du système.

Cela permet d'exploiter davantage de calories en couplant avantageusement le système de mise en dépression avec une pompe à chaleur. L'épuisement de la source froide, c'est-à-dire du dihydrogène produit par l'électrolyseur, peut permettre d'atteindre une température inférieure à la température ambiante ce qui est très favorable au bilan énergétique et à l'assèchement de l'hydrogène (et donc sa qualité).

Ainsi, le système utilise la chaleur du dihydrogène en sortie de l'électrolyseur, mais après le premier module d'échange thermique de sorte que le rejet thermique du dihydrogène dans l'évaporateur soit exploité à plus basse température via un système actif d'une pompe à chaleur. Les calories récupérées du dihydrogène sont réinjectées à une température supérieure à la température d'évaporation de l'eau en amont du générateur de vapeur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 est un schéma fonctionnel représentant le système selon l'invention.
La figure 2 représente un schéma fonctionnel représentant le système selon un mode de réalisation de l'invention comprenant une pompe à chaleur.

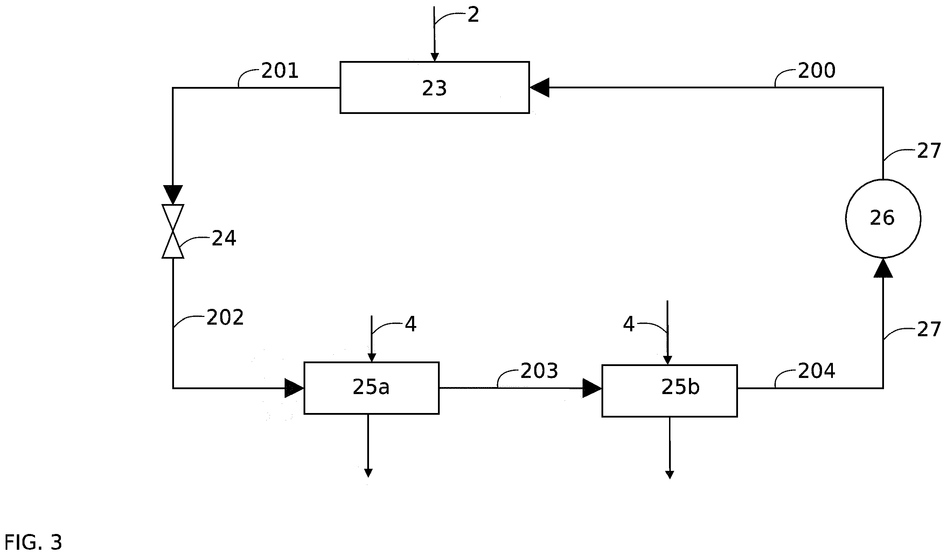

La figure 3 représente un schéma fonctionnel représentant le circuit fluidique de la pompe à chaleur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, le compresseur 29 est agencé en aval du premier module d'échange thermique 5.

Il est avantageux que la compression par le compresseur 29 soit réalisée sur un flux de gaz uniquement et non pas un mélange gaz/liquide. En effectuant, la compression en aval du premier module d'échange thermique, cela assure que quasiment toute l'eau liquide ait été transformée en vapeur d'eau.

Selon un exemple, le premier module d'échange thermique 5 comprend un premier échangeur thermique 5a et un deuxième échangeur thermique 5b agencés en série sur la première ligne d'alimentation 2, le compresseur 29 est agencé en aval du premier échangeur thermique 5a et en amont du deuxième échangeur thermique 5b.

Selon un exemple, le système comprend un premier échangeur thermique 9 agencé entre la deuxième ligne d'évacuation 3 du dioxygène et la première ligne d'alimentation 2 en vapeur d'eau, en amont du générateur de vapeur 6.

Ainsi, ce premier échangeur thermique 9 participe à rehausser la température de l'eau liquide avant le générateur de vapeur 6 de sorte à limiter sa consommation énergétique grâce à la récupération de la chaleur du dioxygène produit par l'électrolyseur.

Selon un exemple, le détendeur 28 est agencé sur la première ligne d'alimentation 2 en amont du premier échangeur thermique 9.

Selon un exemple, le système comprend une deuxième ligne d'alimentation 10 de l'électrolyseur configuré pour alimenter l'électrolyseur en air ou un gaz contenant de l'oxygène.

Selon un exemple, le système comprend un deuxième module d'échange thermique 11 configuré pour assurer un échange thermique entre la deuxième ligne d'alimentation 10 en air et la deuxième ligne d'évacuation 3 du dioxygène.

Ainsi, le deuxième module d'échange thermique 11 permet de chauffer le flux entrant d'air par la chaleur du flux sortant de dioxygène.

Selon un exemple, le système comprend au moins un deuxième échangeur thermique 16 agencé sur la première ligne d'évacuation 4 de dihydrogène, en aval du premier évaporateur 25a.

Selon un exemple, la pompe à chaleur comprend un deuxième évaporateur 25b.

Selon un exemple, le deuxième évaporateur 25b est agencé en série sur le circuit fluidique 27 de la pompe à chaleur en aval du premier évaporateur 25a.

Selon un exemple, le système comprend au moins un troisième échangeur thermique 19 agencé sur la première ligne d'évacuation 4 de dihydrogène, en aval du deuxième évaporateur 25b.

Selon un exemple, le système comprend en aval du deuxième échangeur thermique 16 et en amont du deuxième évaporateur 25a, un séparateur liquide/gaz 17.

Selon un exemple, le deuxième échangeur thermique 16 est agencé entre la première ligne d'évacuation 4 du dihydrogène, en aval du premier évaporateur 25a, et la deuxième ligne d'alimentation 10 de l'air.

Ainsi, le deuxième échangeur thermique 16 agencé entre la deuxième ligne d'alimentation 10 de l'air et la première ligne d'évacuation 4 du dihydrogène permet d'utiliser la chaleur résiduelle du dihydrogène pour chauffer l'air entrant à destination de l'électrolyseur 1. L'échangeur remplace avantageusement un aéroréfrigérant ce qui permet de s'affranchir de la consommation du ventilateur de l'aéroréfrigérant, fortement énergivore.

Selon un exemple, le système comprend un compresseur 12 agencé sur la deuxième ligne d'alimentation 10 en air et destiné à comprimer l'air, préférentiellement agencé en amont du deuxième module d'échange thermique 11 et préférentiellement en aval du deuxième échangeur thermique 16.

L'amont et l'aval, l'entrée, la sortie, en un point donné sont pris en référence au sens de circulation du fluide.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur

Le système selon l'invention comprend un électrolyseur 1 à haute température (EHT). Préférentiellement, l'électrolyseur 1 est de type SOEC de l'acronyme anglais pour « Solid Oxide Electrolyte Cell », c'est-à-dire à oxyde solide.

Le système comprend plusieurs lignes d'alimentation et d'évacuation connectées à l'électrolyseur 1. Ainsi, on entend par ligne une canalisation, un tube ou un ensemble de canalisations ou tubes qui permettent le transport de fluide vers et depuis l'électrolyseur 1.

Le système selon l'invention comprend une première ligne d'alimentation 2 de l'électrolyseur 1 apte à alimenter l'électrolyseur 1 en vapeur d'eau. Selon une possibilité, la première ligne d'alimentation 2 est configurée pour apporter à l'électrolyseur 1 de la vapeur d'eau, on entend par là que la première ligne d'alimentation 2 peut apporter un mélange de vapeur d'eau et d'autre(s) gaz par exemple de l'air ou du dihydrogène ou de dioxyde de carbone. En amont dans cette première ligne d'alimentation 2, la vapeur d'eau n'est pas encore formée et la première ligne d'alimentation 2 est configurée pour recevoir de l'eau liquide. Selon une possibilité préférée, la première ligne d'alimentation 2 comprend une première portion recevant de l'eau liquide et une deuxième portion recevant de la vapeur d'eau. Préférentiellement, la première portion est située en amont d'un générateur de vapeur 6 et la deuxième portion est située en aval dudit générateur de vapeur 6.

Le système selon l'invention comprend une première ligne d'évacuation 4 apte à évacuer depuis l'électrolyseur 1 du dihydrogène (H2). Préférentiellement, la première ligne d'évacuation 4 reçoit le dihydrogène. Le dihydrogène est avantageusement produit par l'électrolyseur 1. Le dihydrogène est sous forme gazeuse. La première ligne d'évacuation 4 peut évacuer un mélange de dihydrogène et de vapeur d'eau, dite résiduelle n'ayant pas était décomposé par l'électrolyseur 1.

Le système selon l'invention comprend une deuxième ligne d'évacuation 3 apte à évacuer depuis l'électrolyseur 1 du dioxygène (O2). Préférentiellement, la deuxième ligne d'évacuation 3 reçoit le dioxygène. Le dioxygène est avantageusement produit par l'électrolyseur 1. Le dioxygène est sous forme gazeuse. La deuxième ligne d'évacuation 3 évacue selon une possibilité un gaz enrichi en dioxygène, par exemple de l'air enrichi en dioxygène.

Dans la suite de la description, la première ligne d'alimentation 2 est dénommée première ligne d'alimentation 2 en vapeur d'eau, la première ligne d'évacuation 4 est dénommée première ligne d'évacuation 4 en dihydrogène et la deuxième ligne d'évacuation 3 est dénommée deuxième ligne d'évacuation 3 en dioxygène sans être limitative sur le gaz, le fluide ou le mélange pouvant être transporté dans ces lignes.

Selon une possibilité, le système comprend un premier module d'échange thermique 5 configuré pour assurer un échange thermique entre la première ligne d'alimentation 2 en vapeur d'eau et la première ligne d'évacuation 4 du dihydrogène. Ce module d'échange thermique est configuré pour transférer les calories du dihydrogène issu de l'électrolyseur 1 à l'eau destinée à alimenter l'électrolyseur 1. Un flux de gaz de dihydrogène assure l'augmentation de température du flux d'eau tout en permettant également de refroidir le flux de dihydrogène évacué et qui est avantageusement asséché et/ou comprimé en vue de son utilisation.

Le premier module d'échange thermique 5 comprend selon un mode de réalisation au moins un échangeur thermique 5a configuré pour assurer le transfert thermique du dihydrogène vers la vapeur d'eau. Selon un mode de réalisation préféré, le premier module d'échange thermique 5 comprend deux échangeurs thermiques 5a, 5b agencés en série entre la première ligne d'alimentation 2 et la première ligne d'évacuation 4. Cette disposition permet de prévoir un deuxième échangeur thermique 5b adapté à la température du dihydrogène en sortie de l'électrolyseur 1, classiquement de l'ordre de 700°C, et un premier échangeur thermique 5a plus habituel adapté à la température du dihydrogène après le passage dans un échangeur thermique, soit classiquement de l'ordre de 330°C. De cette manière, les composants sont optimisés pour les températures et transferts thermiques à réaliser.

Le système selon l'invention comprend un générateur de vapeur 6. Le générateur de vapeur 6 est destiné à produire de la vapeur d'eau à partir d'eau liquide. Le générateur de vapeur 6 est alimenté en énergie pour assurer l'augmentation de la température de l'eau liquide au-dessus de sa température d'évaporation. Le générateur de vapeur 6 est un composant constituant la consommation principale en énergie d'un système d'électrolyseur selon l'état de la technique. Le générateur de vapeur 6 est agencé sur la première ligne d'alimentation 2 en vapeur d'eau.

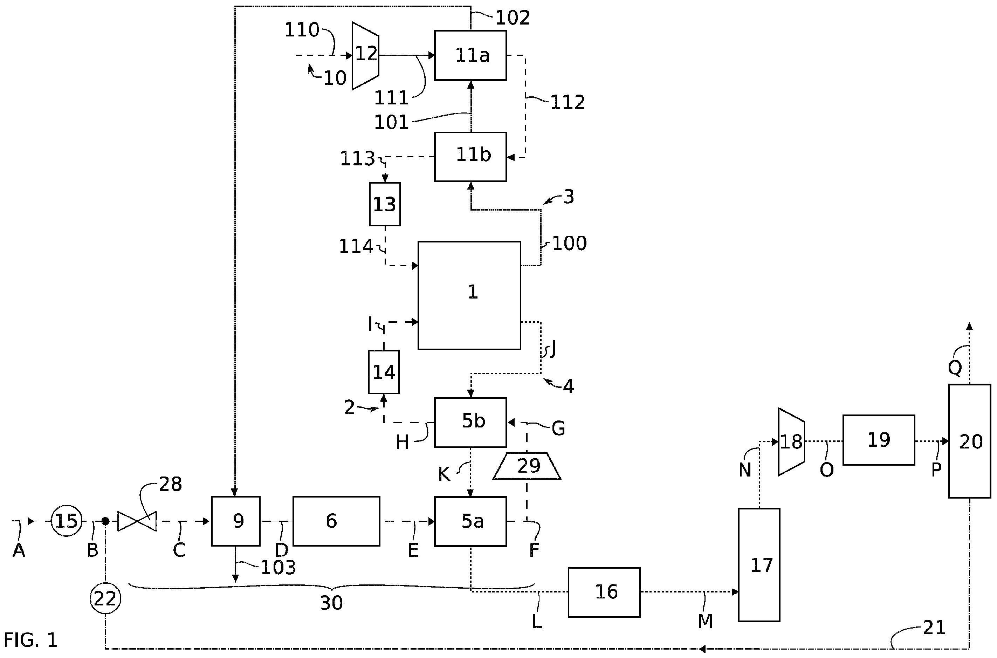

Selon l'invention et tel qu' illustré en figure 1, le système comprend un module de mise en dépression d'un tronçon 30 de la première ligne d'alimentation 2. Le module de mise en dépression est agencé sur la première ligne d'alimentation 2 en vapeur d'eau. Le module de mise en dépression comprend un détendeur 28 et un compresseur 29. Le détendeur 28 est agencé en amont du générateur de vapeur 6 de sorte à abaisser la pression dans la première ligne d'alimentation 2 en amont du générateur de vapeur 6 et préférentiellement dans le générateur de vapeur 6. Cette baisse de pression permet d'abaisser la température d'évaporation de l'eau liquide en vapeur d'eau dans le générateur de vapeur 6.

Le module de mise en dépression comprend un compresseur 29 agencé en aval du générateur de vapeur 6. Le compresseur 29 est préférentiellement agencé sur la première ligne d'alimentation 2 à un emplacement où l'eau circulant dans la première ligne d'alimentation est très majoritairement en phase vapeur. Selon une possibilité, le compresseur 29 est agencé en aval du premier module d'échange thermique 5. En effet, la compression est plus efficace lorsque le flux de fluide est uniquement composé de gaz en l'espèce de vapeur d'eau. Ainsi, il est préférable d'avoir surchauffé la vapeur d'eau dans le premier module d'échange thermique 5 pour s'assurer de l'absence d'eau liquide dans le flux. Préférentiellement, le compresseur 29 est agencé en aval du premier échangeur thermique 5a et en amont du deuxième échangeur thermique 5b du premier module d'échange thermique 5. En effet, ce positionnement, avant le deuxième échangeur thermique 5.b, limite les contraintes thermiques sur ce composant et donc son cout. De plus, la compression après le deuxième échangeur thermique 5b ferait dépasser la température de 700°C spécifiée en entrée de l'électrolyseur 1.

À titre d'exemple, le module de mise en dépression d'un tronçon 30 de la première ligne d'alimentation 2 assure une dépression à 200mbars. La température d'évaporation de l'eau liquide est ainsi abaissée à 60°C. Une telle dépressurisation est également compensée par le compresseur 29 sans nécessiter une trop grande consommation d'énergie. Le rendement énergétique est ainsi favorable.

Le tronçon 30 de la première ligne d'alimentation 2 qui est mis en dépression par le module de mise en dépression s'étend entre le détendeur 28 et le compresseur 29 et comprend le générateur de vapeur 6.

Selon un mode de réalisation, le système comprend un premier échangeur thermique 9 agencé sur la première ligne d'alimentation 2 en vapeur d'eau et sur la deuxième ligne d'évacuation 3 du dioxygène. Le premier échangeur thermique 9 est préférentiellement agencé sur la première ligne d'alimentation 2 en amont du générateur 6. Le premier échangeur thermique 9 est agencé sur la première portion de la première ligne d'alimentation 2. Préférentiellement, le premier échangeur thermique 9 est agencé sur le premier tronçon 30, c'est-à-dire entre le détendeur 28 et le compresseur 29. Ce premier échangeur thermique 9 est configuré pour assurer le transfert thermique de calories prélevées sur le flux de dioxygène évacué de l'électrolyseur 1 et circulant dans la deuxième ligne d'évacuation 3 au profit de la ligne d'alimentation 2 en vapeur d'eau. Le premier échangeur thermique 9 est configuré pour transmettre l'énergie thermique du dioxygène en sortie de l'électrolyseur 1 à l'eau liquide, en amont du générateur de vapeur 6.

Selon un mode de réalisation, le système comprend une deuxième ligne d'alimentation 10 apte à alimenter l'électrolyseur 1 en air. Préférentiellement, la deuxième ligne d'alimentation 10 reçoit de l'air. Selon une possibilité, la deuxième ligne d'alimentation 10 est configurée pour apporter à l'électrolyseur 1 de l'air, on entend par là que la deuxième ligne d'alimentation 10 peut apporter de l'air, l'air étant par exemple un mélange gazeux qui permet de balayer la cellule de l'électrolyseur1 et d'emporter le dioxygène produit par l'électrolyseur 1.

Selon ce mode de réalisation, il est avantageux que le système selon l'invention comprenne un deuxième module d'échange thermique 11 configuré pour assurer un échange thermique entre la deuxième ligne d'alimentation 10 en air et la deuxième ligne d'évacuation 3 du dioxygène. Ce module d'échange thermique 11 est configuré pour transférer les calories du dioxygène issu de l'électrolyseur 1 à l'air destiné à alimenter l'électrolyseur 1. Un flux de gaz de dioxygène assure l'augmentation de la température du flux d'air ce qui permet également de refroidir le flux de dioxygène évacué.

Le deuxième module d'échange thermique 11 comprend selon un mode de réalisation au moins un échangeur thermique 11a configuré pour assurer le transfert thermique du dioxygène vers l'air. Selon un mode de réalisation préféré, le deuxième module d'échange thermique 11 comprend deux échangeurs thermiques 11a, 11b agencés en série entre la deuxième ligne d'alimentation 10 et la deuxième ligne d'évacuation 3. Cette disposition permet de prévoir un deuxième échangeur thermique 11b adapté à la température du dioxygène en sortie de l'électrolyseur 1, classiquement de l'ordre de 700°C, et un premier échangeur thermique 11a plus habituel adapté à la température du dioxygène après le passage dans un échangeur thermique, soit classiquement de l'ordre de 330°C. De cette manière, les composants sont optimisés pour les températures et transferts thermiques à réaliser.

Le système comprend préférentiellement un compresseur 12 agencé sur la deuxième ligne d'alimentation 10 destinée à l'alimentation en air. Le compresseur 12 est préférentiellement agencé en amont du deuxième module d'échange thermique 11, s'il est présent. Le compresseur 12 est destiné à assurer la compression de l'air destiné à être fourni à l'électrolyseur 1. La compression de l'air contribue avantageusement à augmenter la température de l'air avant son entrée dans l'électrolyseur 1.

Selon un mode de réalisation, le système comprend des moyens de traitement du flux de dihydrogène produit. Le dihydrogène produit par l'électrolyseur 1 et qui ressort de celui-ci par la première ligne d'évacuation 4 présente tout d'abord une température très élevée correspondant à la température de réaction de l'électrolyseur 1. Or, en vue de son utilisation, le dihydrogène doit préférentiellement être ramené à une température proche de la température ambiante. Par ailleurs, le dihydrogène évacué de l'électrolyseur 1 par la première ligne d'évacuation 4 peut comprendre de la vapeur d'eau emportée avec le flux de dihydrogène. Il est donc également préféré de séparer le dihydrogène de l'éventuelle vapeur d'eau emportée avec, en l'asséchant.

Le système selon l'invention comprend avantageusement à cet effet au moins un premier étage de traitement destiné à l'assèchement et/ou compression du dihydrogène produit.

Selon une possibilité, le premier étage de traitement comprend un deuxième échangeur thermique 16. Le deuxième échangeur thermique 16 est agencé sur la première ligne d'évacuation 4, préférentiellement en aval du premier module d'échange thermique 5. Ce deuxième échangeur thermique 16 est selon une première possibilité un aéroréfrigérant 16, c'est-à-dire un échangeur thermique entre un fluide et un gaz, le gaz étant mis en mouvement par un ventilateur. Selon une autre possibilité, l'échangeur thermique est un refroidisseur standard, c'est-à-dire sans ventilateur, cette solution étant toutefois moins efficace. Selon une possibilité non représentée en figure 1, le deuxième échangeur thermique 16 assure l'échange thermique entre le fluide et un gaz et en particulier de l'air destiné à l'alimentation de l'électrolyseur 1.Cette disposition permet à la fois de s'affranchir de l'aéroréfrigérant et de son ventilateur consommateur d'énergie et de valoriser la chaleur fatale du dihydrogène circulant dans la première ligne d'évacuation 4 au profit d'air alimentant l'électrolyseur 1.

Le système comprend alors le deuxième échangeur 16 agencé sur la première ligne d'évacuation 4 du dihydrogène et sur la deuxième ligne d'alimentation 10 d'air. La connexion fluidique 110 est donc connectée entre la sortie du deuxième échangeur thermique et l'entrée du compresseur 12. De cette manière, l'air destiné à entrer dans l'électrolyseur 1 est préchauffé par le transfert de calories depuis le dihydrogène. Préférentiellement, l'agencement du deuxième échangeur thermique correspond à celui de l'aéroréfrigérant 16 décrit ci-dessus.

Le premier étage de traitement comprend avantageusement un séparateur de liquide/gaz 17 agencé en aval du deuxième échangeur thermique 16. Le séparateur 17 permet de séparer l'eau liquide du dihydrogène gazeux, l'eau liquide résultant du refroidissement de la vapeur d'eau dans le deuxième échangeur thermique 16 en dessous de son point de condensation.

Selon une possibilité préférée, le système comprend un deuxième étage de traitement agencé en aval du premier étage de traitement sur la première ligne d'évacuation 4. Le deuxième étage de traitement permet de compléter l'assèchement du dihydrogène. Le deuxième étage de traitement comprend avantageusement un troisième échangeur thermique 19 qui comme pour le premier étage peut être un refroidisseur standard, un aéroréfrigérant ou échangeur thermique 19 entre un fluide (le dihydrogène) et l'air destiné à l'alimentation de l'électrolyseur 1. Le troisième échangeur 19 est agencé sur la première ligne d'évacuation 4 du dihydrogène, préférentiellement en aval du deuxième échangeur thermique 16, et sur la deuxième ligne d'alimentation 10 d'air préférentiellement en amont du deuxième échangeur thermique 16. Le deuxième étage comprend préférentiellement un séparateur de liquide/gaz 20. Préférentiellement, le système comprend entre le premier étage de traitement et le deuxième étage de traitement un compresseur 18 configuré pour permettre le deuxième traitement par le troisième échangeur thermique 19 en augmentant au préalable la température du mélange de sorte à pouvoir le refroidir à nouveau.

À l'issue du premier étage de traitement et/ou du deuxième étage de traitement, si présent, l'eau liquide est préférentiellement recyclée en étant renvoyée vers la première ligne d'alimentation 2 en vapeur d'eau par une ligne de recyclage d'eau 21. La ligne de recyclage d'eau est connectée fluidiquement à la première ligne d'alimentation 2, préférentiellement en amont du générateur de vapeur 6, préférentiellement en amont du premier échangeur thermique 9 c'est-à-dire préférentiellement sur la première portion de la première ligne d'alimentation 2. Le dihydrogène est quant à lui utilisé et notamment stocké après des traitements classiques.

Selon une possibilité, le système comprend au moins une source de chaleur complémentaire configurée pour chauffer la vapeur d'eau entrant dans l'électrolyseur 1 jusqu'à une température cible prédéfinie. La source de chaleur complémentaire est avantageusement agencée sur la première ligne d'alimentation 2 en vapeur d'eau, préférentiellement en aval du premier module d'échange thermique 5. La source de chaleur complémentaire est par exemple un réchauffeur électrique 14.

Selon une possibilité, le système comprend au moins une source de chaleur complémentaire configurée pour chauffer l'air entrant dans l'électrolyseur 1 jusqu'à une température cible prédéfinie. La source de chaleur complémentaire est avantageusement agencée sur la deuxième ligne d'alimentation 10 en air, préférentiellement en aval du deuxième module d'échange thermique 11. La source de chaleur complémentaire est par exemple un réchauffeur électrique 13.

Selon un mode de réalisation, le système comprend au moins une pompe 15 agencée sur la première ligne d'alimentation 2 en vapeur d'eau configurée pour mettre en mouvement l'eau liquide dans la première portion de la première ligne d'alimentation 2 en amont du générateur de vapeur 6.

Le système comprend préférentiellement une pompe 22 sur la ligne de recyclage d'eau 21. La pompe 22 est configurée pour mettre en mouvement l'eau liquide circulant dans la ligne de recyclage d'eau 21 et issue du séparateur de gaz/liquide 20.

L'électrolyseur 1 est connecté fluidiquement à la première ligne d'alimentation 2 en vapeur d'eau. La première ligne d'alimentation 2 en vapeur assure la connexion fluidique de composants agencés en amont de l'électrolyseur 1 sur ladite première ligne d'alimentation 2. La description qui suit est faite en débutant en amont de l'électrolyseur 1 et en suivant le sens de circulation dans la première ligne d'alimentation. La première ligne d'alimentation 2 assure la connexion fluidique du détendeur 28 au premier échangeur thermique 9 puis la connexion fluidique du premier échangeur thermique 9 au générateur de vapeur 6, puis la connexion fluidique du générateur de vapeur 6 au premier module d'échange thermique 5, préférentiellement au premier échangeur thermique 5a, puis la connexion fluidique du premier échangeur thermique 5a au compresseur 29, puis la connexion fluidique du compresseur 29 au deuxième échangeur thermique 5b, puis la connexion fluidique du deuxième échangeur thermique 5b au réchauffeur électrique 14, puis la connexion fluidique du réchauffeur électrique 14 à l'électrolyseur 1.

L'électrolyseur 1 est connecté fluidiquement à une première ligne d'évacuation 4 de dihydrogène. La première ligne d'évacuation 4 assure la connexion fluidique de composants agencés en aval de l'électrolyseur 1 sur ladite première ligne d'évacuation. La description qui suit est faite en débutant de l'électrolyseur 1 et en suivant le sens de circulation dans la première ligne d'évacuation 4 depuis l'électrolyseur 1. La première ligne d'évacuation 4 assure la connexion fluidique de l'électrolyseur 1 avec le premier module d'échange thermique 5, plus préférentiellement avec le deuxième échangeur thermique 5b, puis la connexion fluidique du deuxième échangeur thermique 5b au premier échangeur thermique 5a, puis la connexion fluidique du premier échangeur thermique 5a au deuxième échangeur thermique 16, puis la connexion fluidique du deuxième échangeur thermique 16 au séparateur liquide /gaz 17, puis la connexion fluidique du séparateur liquide /gaz 17 au compresseur 18, puis avantageusement la connexion fluidique du compresseur 18 au troisième échangeur thermique 19, puis la connexion fluidique du deuxième échangeur thermique 19 au séparateur liquide /gaz 20.

L'électrolyseur 1 est connecté fluidiquement à une de deuxième ligne d'évacuation 3 de dioxygène. La deuxième ligne d'évacuation 3 assure la connexion fluidique de composants agencés en aval de l'électrolyseur 1 sur ladite deuxième ligne d'évacuation 3. La description qui suit est faite en débutant de l'électrolyseur 1 et en suivant le sens de circulation dans la deuxième ligne d'évacuation 3 depuis l'électrolyseur 1. La deuxième ligne d'évacuation 3 assure la connexion fluidique de l'électrolyseur 1 avec le deuxième module d'échange thermique 11, plus préférentiellement avec le deuxième échangeur thermique 11b, puis la connexion fluidique du deuxième échangeur thermique 11b au premier échangeur thermique 11a, puis la connexion fluidique du premier échangeur thermique 11a au premier échangeur thermique 9.

Préférentiellement, l'électrolyseur 1 est connecté fluidiquement à la deuxième ligne d'alimentation 10 en air. La deuxième ligne d'alimentation 10 assure la connexion fluidique de composants agencés en amont de l'électrolyseur 1 sur ladite deuxième ligne d'alimentation 10. La deuxième ligne d'alimentation assure la connexion fluidique du compresseur 12 au premier échangeur thermique 11a, puis la connexion fluidique du premier échangeur thermique 11a au deuxième échangeur thermique 11b, puis la connexion fluidique du deuxième échangeur thermique 11b au réchauffeur électrique 13, puis la connexion fluidique du réchauffeur électrique 13 à l'électrolyseur 1. Selon une possibilité non représentée, en amont du compresseur 12, la deuxième ligne d'alimentation assure la connexion fluidique du deuxième échangeur thermique 16 au compresseur 12.

Le système comprend des connexions fluidiques décrites ci-après et faisant partie des différentes lignes d'alimentation 2, 10 et d'évacuation 3, 4 du système.

Concernant la première ligne d'alimentation 2, elle comprend avantageusement une connexion fluidique A connectée à l'entrée de la pompe 15.

Avantageusement, la première ligne d'alimentation 2 comprend une connexion fluidique B connectée entre la sortie de la pompe 15 et l'entrée du détendeur 28.

Avantageusement, la première ligne d'alimentation 2 comprend une connexion fluidique C connectée entre la sortie du détendeur 28 et l'entrée du premier échangeur thermique 9.

Avantageusement, la première ligne d'alimentation 2 comprend une connexion fluidique D connectée entre la sortie du premier échangeur thermique 9 et l'entrée du générateur de vapeur 6.

Avantageusement, la première ligne d'alimentation 2 comprend une connexion fluidique E connectée entre la sortie du générateur de vapeur 6 et l'entrée du premier échangeur thermique 5a du module d'échange thermique 5.

Avantageusement, la première ligne d'alimentation 2 comprend une connexion fluidique F connectée entre la sortie du premier échangeur thermique 5a et l'entrée du compresseur 29.

Avantageusement, la première ligne d'alimentation 2 comprend une connexion fluidique G connectée entre la sortie du compresseur 29.et l'entrée du deuxième échangeur thermique 5b.

Avantageusement, la première ligne d'alimentation 2 comprend une connexion fluidique H connectée entre la sortie du deuxième échangeur thermique 5b et l'entrée du réchauffeur électrique 14.

Avantageusement, la première ligne d'alimentation 2 comprend une connexion fluidique I connectée entre la sortie du réchauffeur électrique 14 et l'entrée de l'électrolyseur 1.

Concernant la première ligne d'évacuation 4, elle comprend avantageusement une première connexion fluidique J entre la sortie de l'électrolyseur 1 et l'entrée du deuxième échangeur thermique 5b du premier module d'échange thermique 5.

Avantageusement, la première ligne d'évacuation 4 comprend une connexion fluidique K entre la sortie du deuxième échangeur thermique 5b du premier module d'échange thermique 5 et l'entrée du premier échangeur thermique 5a du premier module d'échange thermique 5.

Avantageusement, la première ligne d'évacuation 4 comprend une connexion fluidique L entre la sortie du premier échangeur thermique 5a et l'entrée du deuxième échangeur thermique 16.

Avantageusement, la première ligne d'évacuation 4 comprend une connexion fluidique M entre la sortie du deuxième échangeur thermique 16 et l'entrée du séparateur 17.

Avantageusement, la première ligne d'évacuation 4 comprend une connexion fluidique N entre la sortie du séparateur 17 et l'entrée du compresseur 18.

Avantageusement la première ligne d'évacuation 4 comprend une connexion fluidique O entre la sortie du compresseur 18 et l'entrée du troisième échangeur thermique 19.

Avantageusement, la première ligne d'évacuation 4 comprend une connexion fluidique P entre la sortie du troisième échangeur thermique 19 et l'entrée du séparateur 20.

Avantageusement, la première ligne d'évacuation 4 comprend une connexion fluidique Q assurant la sortie du dihydrogène depuis le séparateur 20.

Concernant la deuxième ligne d'évacuation 3 de dioxygène, elle comprend avantageusement une connexion fluidique 100 entre la sortie de l'électrolyseur 1 et l'entrée du deuxième échangeur thermique 11b du deuxième module d'échange thermique 11.

Avantageusement, la deuxième ligne d'évacuation 3 comprend une connexion fluidique 101 entre la sortie du deuxième échangeur thermique 11b et l'entrée du premier échangeur thermique 11a du deuxième module d'échange thermique 11.

Avantageusement, la deuxième ligne d'évacuation 3 comprend une connexion fluidique 102 entre la sortie du premier échangeur thermique 11a et l'entrée du premier échangeur thermique 9.

Avantageusement, la deuxième ligne d'évacuation 3 comprend une connexion fluidique 103 entre la sortie du premier échangeur thermique 9 et l'extérieur.

Concernant la deuxième ligne d'alimentation 4 en air, elle comprend selon une possibilité non représentée une connexion fluidique 110 entre la sortie d'un deuxième échangeur thermique 16 remplaçant et l'entrée du compresseur 12.

Avantageusement, la deuxième ligne d'alimentation 4 comprend une connexion fluidique 111 entre la sortie du compresseur 12 et l'entrée du premier échangeur thermique 11a du deuxième module d'échange thermique 11.

Avantageusement, la deuxième ligne d'alimentation 4 comprend une connexion fluidique 112 entre la sortie du premier échangeur thermique 11a et l'entrée du deuxième échangeur thermique 11b du deuxième module d'échange thermique 11.

Avantageusement, la deuxième ligne d'alimentation 4 comprend une connexion fluidique 113 entre la sortie du deuxième échangeur thermique 11b et l'entrée du réchauffeur électrique 13.

Avantageusement, la deuxième ligne d'alimentation 4 comprend une connexion fluidique 114 entre la sortie du réchauffeur électrique 13 et l'entrée de l'électrolyseur 1.

En fonctionnement, l'eau liquide arrive dans la première ligne d'alimentation 2 en vapeur d'eau, plus précisément dans la première portion par la connexion fluidique A. La connexion fluidique A est avantageusement connectée à l'entrée de la pompe 15 qui met en mouvement l'eau liquide. La ligne de recyclage d'eau 21 est avantageusement connectée fluidiquement à la première ligne d'alimentation 2 au niveau de la connexion fluidique B assurant la connexion fluidique de la sortie pompe 15 à l'entrée dans le détendeur 28. L'eau recyclée et l'eau liquide pénètrent dans le détendeur 28. Dans le détendeur 28, la pression est abaissée. À titre d'exemple, le détendeur 28 assure une dépression de la première ligne d'alimentation 2 à 200mbars. Préférentiellement, la première ligne d'alimentation 2 en dépression s'étend entre le détendeur 28 et le compresseur 29. L'eau ressort du détendeur 28 en dépression, par la connexion fluidique C et pénètre, préférentiellement directement, dans le premier échangeur thermique 9. Dans le premier échangeur thermique 9, la température de l'eau augmente par récupération des calories du dioxygène circulant dans le premier échangeur thermique 9. L'eau réchauffée sort du premier échangeur thermique 9 par la connexion fluidique D et pénètre, préférentiellement directement, c'est-à-dire sans organe intermédiaire, dans le générateur de vapeur 6. L'eau liquide est transformée en vapeur par le générateur de vapeur 6.

Selon l'invention, l'énergie devant être fournie par le générateur de vapeur 6 pour la transformation de l'eau liquide en vapeur d'eau est réduite grâce au module de mise en dépression et en particulier au détendeur 28 qui permet d'abaisser la température d'évaporation de l'eau, et avantageusement également au premier échangeur thermique 9 assurant une augmentation de la température de l'eau liquide par récupération d'énergie thermique du dihydrogène et du dioxygène produit par l'électrolyseur 1.

La vapeur d'eau sort du générateur de vapeur 6 par la connexion fluidique E et pénètre, préférentiellement directement, dans le premier module d'échange thermique 5, préférentiellement dans le premier échangeur thermique 5a. La vapeur d'eau est chauffée dans le premier échangeur thermique 5a par récupération des calories du dihydrogène circulant dans le premier échangeur thermique 5a. La vapeur d'eau surchauffée sort du premier échangeur thermique 5a par la connexion fluidique F et pénètre, préférentiellement directement, dans le compresseur 29. Le compresseur 29 permet de remonter la pression de la ligne d'alimentation 2 en aval de celui-ci pour permettre le fonctionnement de l'électrolyseur1. La vapeur d'eau pressurisée par le compresseur 29 sort par la connexion fluidique G et pénètre, préférentiellement directement, dans le deuxième échangeur thermique 5b. La vapeur d'eau est à nouveau chauffée dans le deuxième échangeur thermique 5b par récupération des calories du dihydrogène circulant dans le deuxième échangeur thermique 5b. La vapeur d'eau surchauffée sort du deuxième échangeur thermique 5b par la connexion fluidique H et pénètre, préférentiellement directement, dans le réchauffeur électrique 14, si besoin. Le réchauffeur électrique 14 assure la dernière montée en température éventuellement nécessaire pour que la vapeur d'eau atteigne une température cible prédéfinie pour entrer dans l'électrolyseur 1. La vapeur d'eau sort du réchauffeur électrique 14 par la connexion fluidique I et pénètre, préférentiellement directement, dans l'électrolyseur 1.

L'électrolyseur 1 est alimenté en courant électrique selon une tension et une intensité prédéfinie permettant d'assurer l'électrolyse et donc la production de dihydrogène et dioxygène.

Le dihydrogène sort de l'électrolyseur 1 par la première ligne d'évacuation, par la connexion fluidique J et pénètre, préférentiellement directement, dans le premier module d'échange thermique 5, préférentiellement le deuxième échangeur thermique 5b. Le dihydrogène sort de l'électrolyseur à l'état gazeux chaud, il est nécessaire d'abaisser sa température pour l'utiliser et/ou le stocker. Les calories du dihydrogène sont donc récupérées par la première ligne d'alimentation et plus précisément la vapeur y circulant. Dans le deuxième échangeur thermique 5b, le dihydrogène voit sa température baissée par transfert de calories au profit de la vapeur d'eau circulant dans le deuxième échangeur thermique 5b. Le dihydrogène refroidi sort du deuxième échangeur thermique 5b par la connexion fluidique K et pénètre, préférentiellement directement, dans le premier échangeur thermique 5a. Dans le premier échangeur thermique 5a, le dihydrogène voit à nouveau sa température baissée par transfert de calories au profit de la vapeur d'eau circulant dans le premier échangeur thermique 5a. Le dihydrogène refroidi sort du premier échangeur thermique 5a par la connexion fluidique L et pénètre, préférentiellement directement, dans le deuxième échangeur thermique16. Le dihydrogène sort du deuxième échangeur thermique 16 par la connexion fluidique M et pénètre, préférentiellement directement, dans le séparateur de liquide / gaz 17 assurant la condensation du dihydrogène. Le dihydrogène sort du séparateur de liquide / gaz 17 par la connexion fluidique N et subit si besoin une nouvelle compression en vue d'une nouvelle condensation. Dans ce cas, le dihydrogène sort du séparateur de liquide / gaz 17 par la connexion fluidique N et pénètre, préférentiellement directement, dans le compresseur 18 d'où il sort par la connexion fluidique O et pénètre, préférentiellement directement, dans le troisième échangeur thermique 19 assurant le refroidissement du dihydrogène. Le dihydrogène sort du troisième échangeur thermique 19 par la connexion fluidique P et pénètre, préférentiellement directement, dans le séparateur de liquide / gaz 20 assurant la condensation du dihydrogène. Le dihydrogène condensé sort du séparateur de liquide / gaz 20 par la connexion fluidique Q et peut être utilisé ou stocké. L'eau liquide condensée récupérée du séparateur de liquide / gaz 17, 20 peut être recyclée dans la première ligne d'alimentation 2 en vapeur d'eau par connexion fluidique avec la ligne de recyclage d'eau 21.

Le dioxygène produit par l'électrolyseur sort par la deuxième ligne d'évacuation 3, par la connexion fluidique 100 et pénètre, préférentiellement directement, dans le deuxième module d'échange thermique 11, préférentiellement le deuxième échangeur thermique 11b. Le dioxygène sort de l'électrolyseur à l'état gazeux chaud, il est nécessaire d'abaisser sa température pour le rejet dans l'air. Les calories du dioxygène sont donc récupérées avantageusement par la deuxième ligne d'alimentation 10 et plus précisément l'air y circulant. Dans le deuxième échangeur thermique 11b, le dioxygène voit sa température baissée par transfert de calories au profit de l'air circulant dans le deuxième échangeur thermique 11b. Le dioxygène refroidi sort du deuxième échangeur thermique 11b par la connexion fluidique 101 et pénètre, préférentiellement directement, dans le premier échangeur thermique 11a. Dans le premier échangeur thermique 11a, le dioxygène voit à nouveau sa température baissée par transfert de calories au profit de l'air circulant dans le premier échangeur thermique 11a. Le dioxygène refroidi sort du premier échangeur thermique 11a par la connexion fluidique 102 et avantageusement pénètre, préférentiellement directement, dans le premier échangeur thermique 9 du module de récupération. En passant dans le premier échangeur thermique 9, le dioxygène voit à nouveau sa température baissée par transfert de calories au profit de l'eau liquide circulant dans le premier échangeur thermique 9. L'air sort du premier échangeur thermique par la connexion fluidique 103 et est rejeté dans l'air.

Selon une possibilité, de l'air est fourni à l'électrolyseur 1. L'air arrive par la deuxième ligne d'alimentation 10. Avantageusement, l'air traverse le deuxième échangeur thermique 16 remplaçant l'aéroréfrigérant et récupère des calories du dihydrogène circulant dans l'échangeur thermique. Ce premier échange thermique assure un premier chauffage de l'air. L'air sort du deuxième échangeur thermique 16 par la connexion fluidique 110 et pénètre, préférentiellement directement, dans le compresseur 12. Selon la possibilité illustrée, l'air est comprimé par le compresseur 12 et sa température augmente. L'air pénètre dans le compresseur 12 par la connexion fluidique 110. L'air sort du compresseur 12 par la connexion fluidique 111 et pénètre, préférentiellement directement, dans le deuxième module d'échange thermique 11, préférentiellement dans le premier échangeur thermique 11a. L'air est chauffé dans le premier échangeur thermique 11a par récupération des calories du dioxygène circulant dans le premier échangeur thermique 11a. L'air surchauffé sort du premier échangeur thermique 11a par la connexion fluidique 112 et pénètre, préférentiellement directement, dans le deuxième échangeur thermique 11b. L'air est à nouveau chauffé dans le deuxième échangeur thermique 11b par récupération des calories du dioxygène circulant dans le deuxième échangeur thermique 11b. L'air surchauffé sort du deuxième échangeur thermique 11b par la connexion fluidique 113 et pénètre, préférentiellement directement, dans le réchauffeur électrique 13 si besoin. Le réchauffeur électrique 13 assure la dernière montée en température éventuellement nécessaire pour que l'air atteigne une température cible prédéfinie pour entrer dans l'électrolyseur 1. L'air sort du réchauffeur électrique 13 par la connexion fluidique 114 et pénètre, préférentiellement directement, dans l'électrolyseur 1.

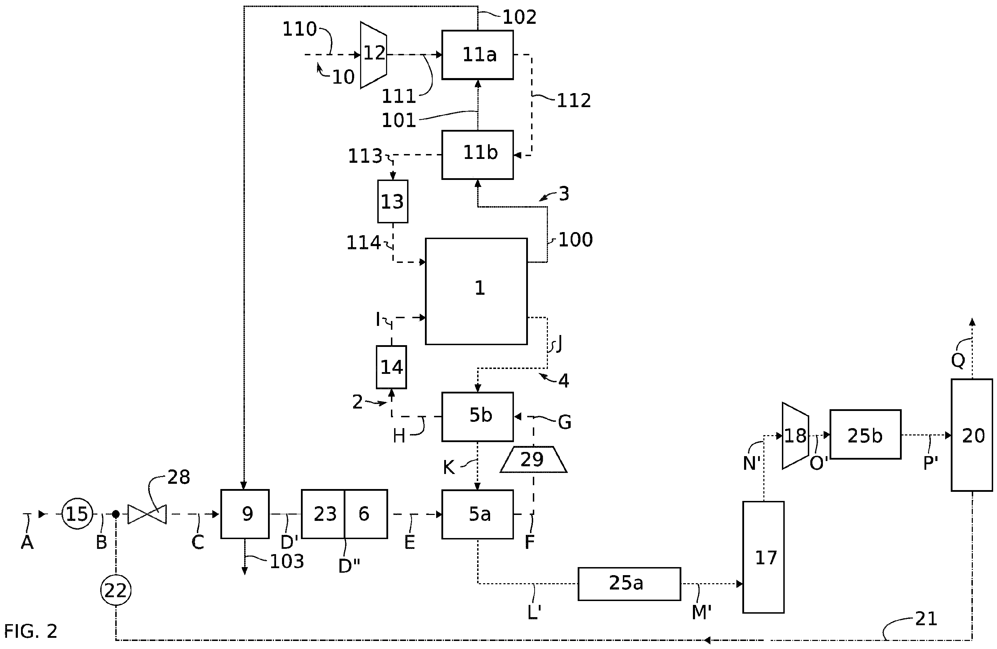

Selon un deuxième aspect de l'invention illustré en figure 2 le système comprend un module de récupération de l'énergie thermique du dihydrogène en sortie du module d'échange thermique 5 au profit de la première ligne d'alimentation 2 en vapeur d'eau.

Selon une possibilité, le module de récupération comprend une pompe à chaleur agencée entre la première ligne d'évacuation 4 du dihydrogène et la première ligne d'alimentation 2 en vapeur d'eau. La pompe à chaleur est configurée pour transférer l'énergie thermique du dihydrogène à l'eau liquide.

La pompe à chaleur comprend un condenseur 23, un détendeur 24, au moins un premier évaporateur 25a, et un compresseur 26.

La pompe à chaleur comprend un circuit fluidique 27 apte à recevoir un fluide caloporteur.

Le fluide caloporteur est par un exemple un fluide classiquement utilisé dans des pompes à chaleur tel que : 1234yf : 2,3,3,3-tétrafluoropropène (HFO-1234yf ), ou R245FA pentafluoropropane, ou R290 propane.

Préférentiellement, le condenseur 23 est agencé entre le circuit fluidique 27 et la première ligne d'alimentation 2, préférentiellement le condenseur 23 est agencé en aval du premier échangeur thermique 9 sur la première ligne d'alimentation 2.

Le circuit fluidique 27 assure la connexion fluidique des composants de la pompe à chaleur, préférentiellement en circuit fermé.

Selon un mode de réalisation, le circuit fluidique 27 comprend une connexion fluidique 200 connectée entre la sortie du compresseur 26 et l'entrée du condenseur 23. Avantageusement, le circuit fluidique 27 comprend une connexion fluidique 201 connectée entre la sortie du condenseur 23 et l'entrée du détendeur 24. Avantageusement, le circuit fluidique 27 comprend une connexion fluidique 202 connectée entre la sortie du détendeur 24 et l'entrée du premier évaporateur 25a.

Selon une possibilité illustrée en figure 2, la pompe à chaleur comprend deux évaporateurs 25a, 25b agencés en série sur le circuit fluidique entre le détendeur 24 et le compresseur 26. Le circuit fluidique 27 comprend une connexion fluidique 203 connectée entre la sortie du premier évaporateur et l'entrée du deuxième évaporateur 25b. Selon cette possibilité, avantageusement, le circuit fluidique 27 comprend une connexion fluidique 204 connectée entre la sortie du deuxième évaporateur 25b et l'entrée du compresseur 26.

Selon une possibilité, non représentée, la pompe à chaleur comprend deux évaporateurs 25a, 25b agencés en parallèle sur le circuit fluidique entre le condenseur 23 et le compresseur 26. Préférentiellement, la pompe à chaleur comprend deux détendeurs 24 agencés en parallèle sur le circuit fluidique respectivement en amont de chaque évaporateur 25a, 25b. Avantageusement, le circuit fluidique 27 comprend une connexion fluidique 201 connectée entre la sortie du condenseur 23 et l'entrée du détendeur 24. Avantageusement, le circuit fluidique 27 comprend une connexion fluidique 202 connectée entre la sortie du détendeur 24 et l'entrée du premier évaporateur 25a. Avantageusement, le circuit fluidique 27 comprend une connexion fluidique 203 connectée entre la sortie du premier échangeur 25a et l'entrée du compresseur 26. Avantageusement en parallèle, le circuit fluidique 27 comprend une connexion fluidique connectée entre la sortie du condenseur 23 et l'entrée du deuxième détendeur. Avantageusement, le circuit fluidique 27 comprend une connexion fluidique connectée entre la sortie du deuxième détendeur et l'entrée du deuxième évaporateur 25b. Avantageusement, le circuit fluidique 27 comprend une connexion fluidique connectée entre la sortie du deuxième échangeur 25b et l'entrée du compresseur 26. Préférentiellement, les connexions fluidiques 203 issues des deux évaporateurs 25a, 25b se réunissent avant l'entrée du compresseur 26 de sorte à s'assurer une seule entrée dans le compresseur 26.

Selon l'invention, le condenseur 23 de la pompe à chaleur est agencé sur la première ligne d'alimentation 2 en vapeur d'eau en amont du générateur de vapeur 6 pour transmettre des calories depuis le fluide caloporteur au profit de l'eau liquide circulant dans la première ligne d'alimentation 2 en amont du générateur de vapeur 6, plus précisément la première portion de la première ligne d'alimentation 2. Préférentiellement, le condenseur 23 est agencé sur le tronçon 30 de la première ligne d'alimentation 2. Préférentiellement, le condenseur 23 est agencé en aval du détendeur 28 et plus précisément en aval du premier échangeur thermique 9. Le condenseur 23 est agencé préférentiellement en aval du premier échangeur thermique 9 et en amont du générateur de vapeur 6. La sortie du premier échangeur thermique 9 est connectée fluidiquement par une connexion fluidique D' à l'entrée du condenseur 23. La sortie du condenseur 23 est connectée fluidiquement à l'entrée du générateur de vapeur 6 par une connexion fluidique D".

Selon l'invention, le premier évaporateur 25a de la pompe à chaleur est agencé sur la première ligne d'évacuation 4 du dihydrogène, préférentiellement en aval du premier module d'échange thermique 5, plus précisément en aval du premier échangeur thermique 5a du premier module d'échange thermique 5. Préférentiellement, le premier évaporateur 25a est agencé en amont du premier étage de traitement, c'est-à-dire éventuellement en amont du deuxième échangeur thermique 16 non représenté en figure 2. Le premier évaporateur 25a assure le transfert d'énergie entre le dihydrogène circulant dans la première ligne d'évacuation 4 et le fluide caloporteur circulant dans le circuit fluidique 27 de la pompe à chaleur.

Selon une possibilité illustrée à la figure 2, la sortie du premier échangeur thermique 5a du premier module d'échange thermique 5 est connectée fluidiquement à l'entrée du premier évaporateur 25a par une connexion fluidique L'. La sortie du premier évaporateur 25a est connectée fluidiquement à l'entrée du séparateur 17 par une connexion fluidique M'. Selon une possibilité non représentée, la sortie du premier évaporateur 25a est connectée fluidiquement à l'entrée du deuxième échangeur thermique 16 par une connexion fluidique non représentée. Et, la sortie du deuxième échangeur thermique 16 est connectée fluidiquement à l'entrée du séparateur 17 par une connexion fluidique non représentée.

Selon un mode de réalisation, la pompe à chaleur comprend un deuxième échangeur thermique 25b. Le deuxième échangeur thermique 25b est agencé en aval du premier étage de traitement du dihydrogène et avantageusement en amont du deuxième étage de traitement du dihydrogène. Éventuellement, le deuxième évaporateur 25a est agencé en amont du troisième échangeur thermique 19 non représenté en figure 2, préférentiellement en aval du compresseur 18.

Selon une possibilité illustrée à la figure 2, la sortie du compresseur 18 est connectée fluidiquement à l'entrée du deuxième évaporateur 25b par une connexion fluidique O'. La sortie du deuxième évaporateur 25b est connectée fluidiquement à l'entrée du séparateur 20 par une connexion fluidique P'. Selon une possibilité non représentée, la sortie du deuxième évaporateur 25b est connectée fluidiquement à l'entrée du troisième échangeur thermique 19 par une connexion fluidique non représentée. Et, la sortie du troisième échangeur thermique 19 est connectée fluidiquement à l'entrée du séparateur 17 par une connexion fluidique non représentée.

Selon une autre possibilité, non représentée, la pompe à chaleur comprend un seul évaporateur 25a dont la sortie est connectée directement à l'entrée du compresseur 26 par la connexion fluidique 203.

La présente invention permet d'exploiter la chaleur fatale du système et plus particulièrement les rejets thermiques du dihydrogène produit. La pompe à chaleur est un système actif permettant de réinjecter en amont du générateur de vapeur et à une température supérieure à la température d'évaporation de l'eau les calories prélevées sur le dihydrogène produit.

Le tableau ci-dessous donne à titre d'exemple la température et la pression en certains points du système selon l'invention telle qu'illustrée en figure 1.

| Connexion fluidique | Température °C | Pression bar |
|---|---|---|
| A | 20 | |
| B | 20 | 1,8 |
| C | 116 | |
| D | | |
| E | 60 | |
| F | | |
| G | | |
| H | 614 | |
| I | 700 | |
| J | 700 | |
| K | 330 | |
| L | 117 | |
| M | | |
| N | 45 | |
| O | | |
| P | 41 | |
| Q | | |
| 100 | 700 | |
| 101 | 450 | |
| 102 | 230 | |
| | | |
| 111 | 65 | 1,55 |
| 112 | 350 | |
| 113 | 670 | |
| 114 | 700 | |
| 200 | 130 | |
| 201 | | |
| 202 | 90 | |
| 203 | | |
| 204 | | |

Cette solution suivant le premier aspect de l'invention permet un gain d'environ 7% sur le rendement global de conversion électricité en dihydrogène.

L'invention n'est pas limitée aux modes de réalisations précédemment décrits et s'étend à tous les modes de réalisation couverts par les revendications.

### LISTE DES REFERENCES

- 1: Electrolyseur
- 2: Ligne d'alimentation en vapeur d'eau
- 3: Ligne d'évacuation de dioxygène
- 4: Ligne d'évacuation de dihydrogène
- 5a: Premier échangeur thermique du premier module d'échange thermique
- 5b: Deuxième échangeur thermique du premier module d'échange thermique
- 6: Générateur de vapeur
- 7: Compresseur
- 9: Premier échangeur thermique
- 10: Ligne d'alimentation en air
- 11a: Premier échangeur thermique du deuxième module d'échange thermique
- 11b: Deuxième échangeur thermique du deuxième module d'échange thermique
- 12: Compresseur
- 13: Réchauffeur électrique
- 14: Réchauffeur électrique
- 15: Pompe
- 16: Deuxième échangeur thermique
- 17: Séparateur liquide/Gaz
- 18: Compresseur
- 19: Troisième échangeur thermique
- 20: Séparateur liquide/Gaz
- 21: Ligne de recyclage d'eau
- 22: Pompe
- 23: Condenseur
- 24: Détendeur
- 25a: Premier évaporateur
- 25b: Deuxième évaporateur
- 26: Compresseur
- 27: Circuit fluidique
- 28: Détenteur
- 29: Compresseur
- 30: Tronçon
- A: Connexion fluidique entrant dans la pompe 15
- B: Connexion fluidique entre la pompe 15 et le détendeur 28
- C: Connexion fluidique entre le détendeur 28 et le premier échangeur thermique 9
- D: Connexion fluidique entre le premier échangeur thermique 9 et le générateur de vapeur 6
- E: Connexion fluidique entre le générateur de vapeur 6 et le premier échangeur thermique 5a
- F: Connexion fluidique entre le premier échangeur thermique 5a et le compresseur 29
- G: Connexion fluidique entre le compresseur 29 et le deuxième échangeur thermique 5b et
- H: Connexion fluidique entre le deuxième échangeur thermique 5b et le réchauffeur 14
- I: Connexion fluidique entre le réchauffeur 14 et l'électrolyseur 1
- J: Connexion fluidique entre le l'électrolyseur 1 et le deuxième échangeur thermique 5b
- K: Connexion fluidique entre le deuxième échangeur thermique 5b et le premier échangeur thermique 5a
- L: Connexion fluidique entre le premier échangeur thermique 5a et l'aéroréfrigérant 16
- M: Connexion fluidique entre l'aéroréfrigérant 16 et le séparateur 17
- N: Connexion fluidique entre le séparateur 17 et le compresseur 18
- O: Connexion fluidique entre le compresseur 18 et l'aéroréfrigérant 19
- P: Connexion fluidique entre l'aéroréfrigérant 19 et le séparateur 20
- Q: Connexion fluidique sortant du séparateur 20
- D': Connexion fluidique entre le premier échangeur thermique 9 et le condenseur 23
- D": Connexion fluidique entre le condenseur 23 et le générateur de vapeur 6
- L': Connexion fluidique entre le premier échangeur thermique 5a et le premier évaporateur 25a
- M': Connexion fluidique entre le premier évaporateur 25a et séparateur 17
- O': Connexion fluidique entre le compresseur 18 et le deuxième évaporateur 25b
- P': Connexion fluidique entre le deuxième évaporateur 25b et le séparateur 20
- 100: Connexion fluidique entre l'électrolyseur 1 et le deuxième échangeur thermique 11b
- 101: Connexion fluidique entre le deuxième échangeur thermique 11b et le premier échangeur thermique 11a
- 102: Connexion fluidique entre le premier échangeur thermique 11a et le premier échangeur thermique 9
- 110: Connexion fluidique d'entrée dans le compresseur 12
- 111: Connexion fluidique entre le compresseur 12 et le premier échangeur thermique 11a
- 112: Connexion fluidique entre le premier échangeur thermique 11a et le deuxième échangeur thermique 11b
- 113: Connexion fluidique entre le deuxième échangeur thermique 11b et le réchauffeur 13
- 114: Connexion fluidique entre le réchauffeur 13 et l'électrolyseur 1
- 200: Connexion fluidique entre le compresseur 26 et le condenseur 23
- 201: Connexion fluidique entre le condenseur 23 et le détendeur 24
- 202: Connexion fluidique entre le détendeur 24 et le premier évaporateur 25a
- 203: Connexion fluidique entre le premier évaporateur 25a et le deuxième évaporateur 25b
- 204: Connexion fluidique entre le deuxième évaporateur 25b et le compresseur 26

## Revendications

1. Système comprenant
- un électrolyseur (1) à haute température (EHT),
- une première ligne d'alimentation (2) de l'électrolyseur configurée pour alimenter l'électrolyseur (1) en vapeur d'eau,
- une première ligne d'évacuation (4) de l'électrolyseur configurée pour évacuer depuis l'électrolyseur (1) du dihydrogène,
- une deuxième ligne d'évacuation (3) de l'électrolyseur configurée pour évacuer depuis l'électrolyseur (1) du dioxygène,
- un premier module d'échange thermique (5) configuré pour assurer un échange thermique entre la première ligne d'alimentation (2) en vapeur d'eau et la première ligne d'évacuation (4) du dihydrogène,
- un générateur de vapeur (6) agencé sur la première ligne d'alimentation (2) en vapeur d'eau, en amont du premier module d'échange thermique (5), et configuré pour produire de la vapeur d'eau à partir d'eau liquide,
**caractérisé en ce que** le système comprend un module de mise en dépression d'un tronçon (30) de la première ligne d'alimentation (2), le module comprenant un détendeur (28) et un compresseur (29), le détendeur (28) étant agencé, sur la première ligne d'alimentation (2) en vapeur d'eau, en amont du générateur de vapeur (6) et le compresseur (29) étant agencé, sur la première ligne d'alimentation (2) en vapeur d'eau, en aval du générateur de vapeur (6).

2. Système selon la revendication précédente dans lequel le compresseur (29) est agencé en aval du premier module d'échange thermique (5).

3. Système selon la revendication 1 dans lequel le premier module d'échange thermique (5) comprend un premier échangeur thermique (5a) du premier module d'échange thermique et un deuxième échangeur thermique (5b) du premier module d'échange thermique agencés en série, le compresseur (29) est agencé en aval du premier échangeur thermique (5a) du premier module d'échange thermique et en amont du deuxième échangeur thermique (5b) du premier module d'échange thermique.

4. Système selon l'une quelconque des revendications précédentes comprenant un premier échangeur thermique (9) agencé entre la deuxième ligne d'évacuation (3) du dioxygène et la première ligne d'alimentation (2) en vapeur d'eau, en amont du générateur de vapeur (6).

5. Système selon la revendication précédente dans lequel le détendeur (28) est agencé sur la première ligne d'alimentation (2) en amont du premier échangeur thermique (9) agencé entre la deuxième ligne d'évacuation (3) du dioxygène et la première ligne d'alimentation (2) en vapeur d'eau.

6. Système selon l'une quelconque des revendications précédentes comprenant une deuxième ligne d'alimentation (10) de l'électrolyseur configuré pour alimenter l'électrolyseur (1) en air.

7. Système selon la revendication précédente comprenant un deuxième module d'échange thermique (11) configuré pour assurer un échange thermique entre la deuxième ligne d'alimentation (10) en air et la deuxième ligne d'évacuation (3) du dioxygène.

8. Système selon l'une quelconque des revendications précédentes comprenant un module de récupération de l'énergie thermique du dihydrogène en sortie du premier module d'échange thermique (5) au profit de la première ligne d'alimentation (2) en vapeur d'eau, le module de récupération comprenant une pompe à chaleur comprenant :
- un circuit fluidique (27) configuré pour recevoir un fluide caloporteur,
- un premier évaporateur (25a) agencé sur la première ligne d'évacuation (4) en aval du premier module d'échange thermique (5) configuré pour transférer l'énergie thermique du dihydrogène au fluide caloporteur,
- un compresseur (26) configuré pour comprimer le fluide caloporteur,
- un condenseur (23) agencé sur la première ligne d'alimentation (2) en vapeur d'eau en amont du générateur de vapeur (6) et configuré pour transférer l'énergie thermique du fluide caloporteur à l'eau liquide,
- un détendeur (24) configuré pour détendre le fluide caloporteur,
- le circuit fluidique (27) étant configuré pour connecter fluidiquement le premier évaporateur (25a) au compresseur (26), le compresseur (26) au condenseur (23), le condenseur (23) au détendeur (24) et le détendeur (24) au premier évaporateur (25a).

9. Système selon la revendication précédente comprenant au moins un deuxième échangeur thermique (16) agencé sur la première ligne d'évacuation (4) de dihydrogène, en aval du premier évaporateur (25a).

10. Système selon l'une quelconque des deux revendications précédentes dans lequel la pompe à chaleur comprend un deuxième évaporateur (25b).

11. Système selon la revendication précédente en combinaison de la revendication 4 ou 5 dans lequel le deuxième évaporateur (25b) est agencé en série sur le circuit fluidique (27) de la pompe à chaleur en aval du premier évaporateur (25a).

12. Système selon l'une quelconque des deux revendications précédentes comprenant au moins un troisième échangeur thermique (19) agencé sur la première ligne d'évacuation (4) de dihydrogène, en aval du deuxième évaporateur (25b).

13. Système selon l'une quelconque des trois revendications précédentes comprenant, en aval du deuxième échangeur thermique (16) agencé sur la première ligne d'évacuation (4) de dihydrogène en aval du premier évaporateur (25a), et en amont du deuxième évaporateur (25b), un séparateur liquide/gaz (17).

14. Système selon la revendication 9 en combinaison avec l'une quelconque des revendications 6 ou 7 et optionnellement avec l'une quelconque des revendications 10 à 13, le deuxième échangeur thermique (16) est agencé entre la première ligne d'évacuation (4) du dihydrogène, et la deuxième ligne d'alimentation (10) de l'air.

15. Système selon l'une quelconque des trois revendications précédentes comprenant un compresseur (12) agencé sur la deuxième ligne d'alimentation (10) en air et destiné à comprimer l'air.

## Patentansprüche

1. System, umfassend
- einen Hochtemperatur-Elektrolyseur (1) (EHT),
- eine erste Versorgungsleitung (2) des Elektrolyseurs, die dazu konfiguriert ist, den Elektrolyseur (1) mit Wasserdampf zu versorgen,
- eine erste Ableitungsleitung (4) des Elektrolyseurs, die dazu konfiguriert ist, ausgehend von dem Elektrolyseur (1) Dihydrogen abzuleiten,
- eine zweite Ableitungsleitung (3) des Elektrolyseurs, die dazu konfiguriert ist, ausgehend von dem Elektrolyseur (1) Disauerstoff abzuleiten,
- ein erstes Wärmeaustauschmodul (5), das dazu konfiguriert ist, einen Wärmeaustausch zwischen der ersten Wasserdampfversorgungsleitung (2) und der ersten Ableitungsleitung (4) des Dihydrogens sicherzustellen,
- einen Dampfgenerator (6), der auf der ersten Wasserdampfversorgungsleitung (2) stromaufwärts des ersten Wärmeaustauschmoduls (5) eingerichtet und dazu konfiguriert ist, Wasserdampf ausgehend von flüssigem Wasser zu erzeugen,
**dadurch gekennzeichnet, dass** das System ein Modul zum Vakuumherstellen in einem Abschnitt (30) der ersten Versorgungsleitung (2) umfasst, wobei das Modul ein Druckminderventil (28) und einen Kompressor (29) umfasst, wobei das Druckminderventil (28) auf der ersten Wasserdampfversorgungsleitung (2) stromaufwärts des Dampfgenerators (6) eingerichtet ist, und der Kompressor (29) auf der ersten Wasserdampfversorgungsleitung (2) stromabwärts des Dampfgenerators (6) eingerichtet ist.

2. System nach dem vorstehenden Anspruch, wobei der Kompressor (29) stromabwärts des ersten Wärmeaustauschmoduls (5) eingerichtet ist.

3. System nach Anspruch 1, wobei das erste Wärmeaustauschmodul (5) einen ersten Wärmetauscher (5a) des ersten Wärmeaustauschmoduls und einen zweiten Wärmetauscher (5b) des ersten Wärmeaustauschmoduls, die in Reihe geschaltet sind, umfasst, der Kompressor (29) stromabwärts des ersten Wärmetauschers (5a) des ersten Wärmeaustauschmoduls und stromaufwärts des zweiten Wärmetauschers (5b) des ersten Wärmeaustauschmoduls eingerichtet ist.

4. System nach einem der vorstehenden Ansprüche, das einen ersten Wärmetauscher (9) umfasst, der zwischen der zweiten Ableitungsleitung (3) des Disauerstoffs und der ersten Wasserdampfversorgungsleitung (2) stromaufwärts des Dampfgenerators (6) eingerichtet ist.

5. System nach dem vorstehenden Anspruch, wobei das Druckminderventil (28) auf der ersten Versorgungsleitung (2) stromaufwärts des ersten Wärmetauschers (9) eingerichtet ist, der zwischen der zweiten Ableitungsleitung (3) des Disauerstoffs und der ersten Wasserdampfversorgungsleitung (2) eingerichtet ist.

6. System nach einem der vorstehenden Ansprüche, das eine zweite Versorgungsleitung (10) des Elektrolyseurs umfasst, die dazu konfiguriert ist, den Elektrolyseur (1) mit Luft zu versorgen.

7. System nach einem der vorstehenden Ansprüche, das ein zweites Wärmeaustauschmodul (11) umfasst, das dazu konfiguriert ist, einen Wärmeaustausch zwischen der zweiten Luftversorgungsleitung (10) und der zweiten Ableitungsleitung (3) des Disauerstoffs sicherzustellen.

8. System nach einem der vorstehenden Ansprüche, das ein Rückgewinnungsmodul der Wärmeenergie des Dihydrogens am Ausgang des ersten Wärmeaustauschmoduls (5) zugunsten der ersten Wasserdampfversorgungsleitung (2) umfasst, wobei das Rückgewinnungsmodul eine Wärmepumpe umfasst, die Folgendes umfasst:
- einen Fluidkreislauf (27), der dazu konfiguriert ist, ein Kühlmittel aufzunehmen,
- einen ersten Verdampfer (25a), der auf der ersten Ableitungsleitung (4) stromabwärts des ersten Wärmeaustauschmoduls (5) eingerichtet ist, der dazu konfiguriert ist, die Wärmeenergie des Dihydrogens an das Kühlmittel zu übertragen,
- einen Kompressor (26), der dazu konfiguriert ist, das Kühlmittel zu komprimieren,
- einen Kondensator (23), der auf der ersten Wasserdampfversorgungsleitung (2) stromaufwärts des Dampfgenerators (6) eingerichtet und dazu konfiguriert ist, die Wärmeenergie des Kühlmittels an das flüssige Wasser zu übertragen,
- ein Druckminderventil (24), das dazu konfiguriert ist, das Kühlmittel zu entspannen,
wobei der Fluidkreislauf (27) dazu konfiguriert ist, den ersten Verdampfer (25a) fluidisch mit dem Kompressor (26), den Kompressor (26) mit dem Kondensator (23), den Kondensator (23) mit dem Druckminderventil (24) und das Druckminderventil (24) mit dem ersten Verdampfer (25a) zu verbinden.

9. System nach dem vorstehenden Anspruch, das mindestens einen zweiten Wärmetauscher (16) umfasst, der auf der ersten Dihydrogen-Ableitungsleitung (4) stromabwärts des ersten Verdampfers (25a) eingerichtet ist.

10. System nach einem der beiden vorstehenden Ansprüche, wobei die Wärmepumpe einen zweiten Verdampfer (25b) umfasst.

11. System nach dem vorstehenden Anspruch in Kombination mit Anspruch 4 oder 5, wobei der zweite Verdampfer (25b) in Reihe geschaltet auf dem Fluidkreislauf (27) der Wärmepumpe stromabwärts des ersten Verdampfers (25a) eingerichtet ist.

12. System nach einem der beiden vorstehenden Ansprüche, das mindestens einen dritten Wärmetauscher (19) umfasst, der auf der ersten Dihydrogen-Ableitungsleitung (4) stromabwärts des zweiten Verdampfers (25b) eingerichtet ist.

13. System nach einem der drei vorstehenden Ansprüche, das stromabwärts des zweiten Wärmetauschers (16), der auf der ersten Dihydrogen-Ableitungsleitung (4) stromabwärts des ersten Verdampfers (25a) und stromaufwärts des zweiten Verdampfers (25b) eingerichtet ist, einen Flüssigkeit-/Gas-Abscheider (17) umfasst.

14. System nach Anspruch 9 in Kombination mit einem der Ansprüche 6 oder 7 und wahlweise mit einem der Ansprüche 10 bis 13,
wobei der zweite Wärmetauscher (16) zwischen der ersten Ableitungsleitung (4) des Dihydrogens und der zweiten Luftversorgungsleitung (10) eingerichtet ist.

15. System nach einem der drei vorstehenden Ansprüche, das einen Kompressor (12) umfasst, der auf der zweiten Luftversorgungsleitung (10) eingerichtet und dazu bestimmt ist, die Luft zu komprimieren.

## Claims

1. System comprising
- a high temperature electrolyser (HTE) (1),
- a first supply line (2) of the electrolyser configured to supply the electrolyser (1) with steam,
- a first discharge line (4) of the electrolyser configured to discharge dihydrogen from the electrolyser (1),
- a second discharge line (3) of the electrolyser configured to discharge dioxygen from the electrolyser (1),
- a first heat exchange module (5) configured to ensure a heat exchange between the first steam supply line (2) and the first dihydrogen discharge line (4),
- a steam generator (6) arranged on the first steam supply line (2), upstream from the first heat exchange module (5), and configured to produce steam from liquid water,
**characterised in that** the system comprises a module for depressing a section (30) of the first supply line (2), the module comprising an expansion device (28) and a compressor (29), the expansion device (28) being arranged, on the first steam supply line (2), upstream from the steam generator (6) and the compressor (29) being arranged, on the first steam supply line (2), downstream from the steam generator (6).

2. System according to the preceding claim, wherein the compressor (29) is arranged downstream from the first heat exchange module (5).

3. System according to claim 1, wherein the first heat exchange module (5) comprises a first heat exchanger (5a) of the first heat exchange module and a second heat exchanger (5b) of the first heat exchange module arranged in series, the compressor (29) is arranged downstream from the first heat exchanger (5a) of the first heat exchange module and upstream from the second heat exchanger (5b) of the first heat exchange module.

4. System according to any one of the preceding claims, comprising a first heat exchanger (9) arranged between the second dioxygen discharge line (3) and the first steam supply line (2), upstream from the steam generator (6).

5. System according to the preceding claim, wherein the expansion device (28) is arranged on the first supply line (2) upstream from the first heat exchanger (9) arranged between the second dioxygen discharge line (3) and the first steam supply line (2).

6. System according to any one of the preceding claims, comprising a second supply line (10) of the electrolyser configured to supply the electrolyser (1) with air.

7. System according to the preceding claim, comprising a second heat exchange module (11) configured to ensure a heat exchange between the second air supply line (10) and the second dioxygen discharge line (3).

8. System according to any one of the preceding claims, comprising a module for recovering the thermal energy from the dihydrogen at the outlet of the first heat exchange module (5) to the benefit of the first steam supply line (2), the recovery module comprising a heat pump comprising:
- a fluid circuit (27) configured to receive a heat-transfer fluid,
- a first evaporator (25a) arranged on the first discharge line (4) downstream from the first heat exchange module (5) configured to transfer the thermal energy from the dihydrogen to the heat-transfer fluid,
- a compressor (26) configured to compress the heat-transfer fluid,
- a condenser (23) arranged on the first steam supply line (2) upstream from the steam generator (6) and configured to transfer the thermal energy from the heat-transfer fluid to the liquid water,
- an expansion device (24) configured to expand the heat-transfer fluid,
- the fluid circuit (27) being configured to fluidically connect the first evaporator (25a) to the compressor (26), the compressor (26) to the condenser (23), the condenser (23) to the expansion device (24) and the expansion device (24) to the first evaporator (25a).

9. System according to the preceding claim, comprising at last one second heat exchanger (16) arranged on the first dihydrogen discharge line (4), downstream from the first evaporator (25a).

10. System according to any one of the two preceding claims, wherein the heat pump comprises a second evaporator (25b).

11. System according to the preceding claim combined with claim 4 or 5, wherein the second evaporator (25b) is arranged in series on the fluid circuit (27) of the heat pump downstream from the first heat exchanger (25a).

12. System according to any one of the two preceding claims, comprising at least one third heat exchanger (19) arranged on the first dihydrogen discharge line (4), downstream from the second evaporator (25b).

13. System according to any one of the three preceding claims, comprising, downstream from the second heat exchanger (16) arranged on the first dihydrogen discharge line (4) downstream of the first evaporator (25a), and upstream from the second evaporator (25b), a liquid/gas separator (17).

14. System according to claim 9 combined with any one of claims 6 or 7, and optionally any one of claims 10 to 13, the second heat exchanger (16) is arranged between the first dihydrogen discharge line (4), and the second air supply line (10).

15. System according to any one of the three preceding claims, comprising a compressor (12) arranged on the second air supply line (10) and intended to compress the air.
